(19) Europäisches Patentamt
European Patent Office
Office européen des brevets

(11) **EP 4 644 852 A1**

(12) **EUROPEAN PATENT APPLICATION**
published in accordance with Art. 153(4) EPC

(43) Date of publication:
**05.11.2025 Bulletin 2025/45**

(21) Application number: **23911458.0**

(22) Date of filing: **21.11.2023**

(51) International Patent Classification (IPC):
*G01J 3/50* (2006.01)

(52) Cooperative Patent Classification (CPC):
**G01J 3/50**

(86) International application number:
**PCT/JP2023/041792**

(87) International publication number:
**WO 2024/142676 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211352**

(71) Applicant: **Kitagawa Industries Co., Ltd.**
**Inazawa-shi, Aichi 492-8446 (JP)**

(72) Inventors:
• **YAMADA, Kazuki**
  **Kasugai-shi, Aichi 480-0303 (JP)**
• **FURUTA, Ken**
  **Kasugai-shi, Aichi 480-0303 (JP)**
• **ASAKAWA, Kazuaki**
  **Kasugai-shi, Aichi 480-0303 (JP)**
• **ZHAO, Lu**
  **Kasugai-shi, Aichi 480-0303 (JP)**

(74) Representative: **Barker Brettell LLP**
**100 Hagley Road**
**Edgbaston**
**Birmingham B16 8QQ (GB)**

(54) **COLORIMETRY DEVICE**

(57)    [Problem] To provide a colorimetric device capable of appropriately measuring a color of the same location when measuring a color of a specimen a plurality of times. [Solution]A colorimetric device includes a main body part, a light source unit, and a detection unit. The main body part is configured for mounting of a specimen. The light source unit becomes capable of emitting light to the specimen when the specimen is mounted on the main body part. The detection unit becomes capable of receiving reflected light from the specimen and detects a color of the specimen by receiving the reflected light when the specimen is mounted on the main body part. When the specimen is mounted on the main body part, a relative position of the specimen with respect to the main body part, the light source unit, and the detection unit is configured to be positioned at the same relative position.

FIG. 1A

**(Cont. next page)**

EP 4 644 852 A1

FIG. 1B

FIG. 1C

**Description**

Technical Field

The present disclosure relates to a colorimetric device.

Background Art

A colorimeter that can measure a color through a button operation is known (for example, see Patent Document 1). A colorimeter disclosed in Patent Document 1 includes a colorimetric unit on a lower surface. When a user presses a colorimetric button on an upper surface, the colorimetric unit measures a color of a specimen.

Citation List

Patent Literature

Patent Document 1: JP 2022-127869 A

Summary of Invention

Technical Problem

However, the colorimeter described in Patent Document 1 does not include a mechanism capable of accurately positioning a relative position between the specimen and the colorimetric unit. For this reason, when measuring the color of the specimen a plurality of times, it is difficult to perform positioning such that a measurement target location on the specimen in each measurement is exactly the same. Therefore, for example, when measuring a color of a specimen whose color changes over time a plurality of times, even if a change in color is detected, it is unclear whether a change in color at the same location is detected or a change in color due to measurements at different locations is detected.

In an aspect of the present disclosure, it is desirable to provide a colorimetric device that can appropriately measure a color of the same location when measuring a color of a specimen a plurality of times.

Solution to Problem

Hereinafter, an aspect of the present disclosure will be described.

(1) An aspect of the present disclosure is a colorimetric device capable of measuring a color of a specimen, the colorimetric device including a main body part, a light source unit, and a detection unit. The main body part is configured for mounting of a specimen. The light source unit becomes capable of emitting light to the specimen when the specimen is mounted on the main body part. The detection unit becomes capable of receiving reflected light from the specimen and detects a color of the specimen by receiving the reflected light when the specimen is mounted on the main body part. When the specimen is mounted on the main body part, a relative position of the specimen with respect to the main body part, the light source unit, and the detection unit is configured to be positioned at the same relative position.

According to the colorimetric device configured as described above, the relative position of the specimen with respect to the main body part, the light source unit, and the detection unit can be positioned at the same relative position by mounting the specimen on the main body part. For this reason, when measuring a color of the specimen a plurality of times, it is possible to perform positioning such that a measurement target location on the specimen in each measurement is exactly the same. Therefore, for example, when measuring a color of a specimen whose color changes over time a plurality of times, it is possible to detect a change in color at the same location.

(2) In an aspect of the present disclosure, the detection unit may include a plurality of color sensors. The plurality of color sensors may be configured to receive respective reflected lights from a plurality of locations to be measured on a surface of the specimen and to detect respective colors of the plurality of locations to be measured.

According to the colorimetric device configured as described above, it is possible to detect a color of each of the plurality of locations to be measured. Therefore, for example, in a case where a color of the specimen gradually changes from one end toward the other end, it is possible to detect to what extent a discoloration region has progressed.

(3) In an aspect of the present disclosure, the main body part may be configured to shield the specimen from light coming from an outside of the colorimetric device when the specimen is mounted on the main body part.

According to the colorimetric device configured as described above, when measuring a color of the specimen, it is possible to eliminate the influence of light coming from the outside of the colorimetric device.

(4) In an aspect of the present disclosure, the light source unit may include one or more light-emitting elements and a light scattering plate that scatters light emitted by the one or more light-emitting elements, and may be configured to irradiate the specimen with light scattered by the light scattering plate.

According to the colorimetric device configured as described above, the light emitted from the one or more light-emitting elements is scattered by the light scattering plate, and then the light is emitted to the specimen. Therefore, light can be emitted more uniformly to the specimen, as compared with a case where there is no light scattering plate.

(5) In an aspect of the present disclosure, a holder capable of holding the specimen may be provided. The main body part may have a slot into which the holder can be inserted and may be configured for mounting of the specimen and the holder onto the main body part when the holder holding the specimen is inserted into the slot.

According to the colorimetric device configured as described above, when the specimen is held by the holder and the holder is inserted into the slot, the specimen and the holder are mounted on the main body part. Therefore, for example, in a case where the specimen may remain held by the holder, the holder may be mounted on and demounted from the main body part, thereby suppressing an excessive load from being applied to the specimen, as compared with a case where the specimen itself needs to be mounted and demounted.

Brief Description of Drawings

FIG. 1A is a perspective view illustrating a use procedure (part 1) of a colorimetric device. FIG. 1B is a perspective view illustrating the use procedure (part 2) of the colorimetric device. FIG. 1C is a perspective view illustrating the use procedure (part 3) of the colorimetric device.
FIG. 2A is a cross-sectional view illustrating an internal structure of the colorimetric device. FIG. 2B is an enlarged view of part IIB illustrated in FIG. 2A. FIG. 2C is a bottom view illustrating a board, light-emitting elements, color sensors, and a light scattering plate.
FIG. 3 is a block diagram illustrating a configuration of a control system of the colorimetric device.
FIG. 4 is a flowchart of measurement processing.
FIG. 5A is an explanatory diagram for describing a discoloration situation when an entire specimen undergoes discoloration over time. FIG. 5B is an explanatory diagram for describing output values obtained when colors of the specimen illustrated in FIG. 5A are measured by the colorimetric device.
FIG. 6A is an explanatory diagram for describing a discoloration situation when a specimen undergoes discoloration from one end toward the other end over time. FIG. 6B is an explanatory diagram for describing output values obtained when colors of the specimen illustrated in FIG. 6A are measured by the colorimetric device.
FIG. 7A is an explanatory diagram for describing a discoloration situation when a part of the specimen undergoes discoloration over time. FIG. 7B is an explanatory diagram for describing output values obtained when colors of the specimen illustrated in FIG. 7A are measured by the colorimetric device. FIG. 7C is a graph showing measurement results of specimen No. 2 illustrated in FIG. 7A. FIG. 7D is a graph showing measurement results of specimen No. 3 illustrated in FIG. 7A.
FIG. 8 is a block diagram illustrating a configuration of a control system of a colorimetric device exemplified as another embodiment.

Reference Signs List

1, 31: Colorimetric device, 2: Main body part, 3: Holder, 5: Recessed portion, 6: Slot, 7: Liquid crystal display, 8: Battery, 10: Control board, 11A: Control IC, 11B: Power supply control IC, 12A to 12G: Light-emitting element, 13A to 13E: Color sensor, 14: Light scattering plate, 21, 21A, 21B: Control unit, 22: Display unit, 23: Light source unit, 24: Detection unit, 25: Operation unit, 26: Power supply control unit, 32: Processing terminal, 35, 36: Power supply/communication unit, S: Specimen

Description of Embodiments

Next, the colorimetric device of the present disclosure will be described with reference to exemplary embodiments. Note that, in the following description, based on the six-view diagrams of the colorimetric device,
the direction in which portions in the front view are oriented is defined as forward, the direction in which portions in the rear view are oriented is defined as backward, the direction in which portions in the left side view are oriented is defined as leftward, the direction in which portions in the right side view are oriented is defined as rightward, the direction in which portions in the plan view are oriented is defined as upward, and the direction in which portions in the bottom view are oriented is defined as downward. In addition, these directions are indicated by arrows in the drawings.

[Configuration of Colorimetric Device]

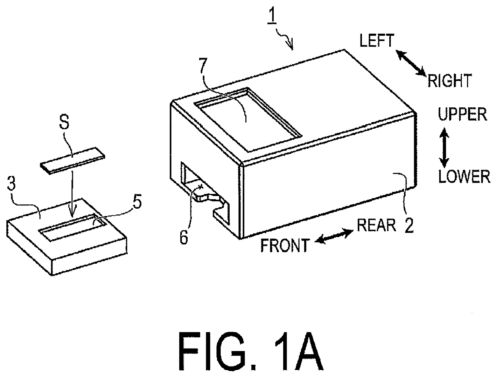

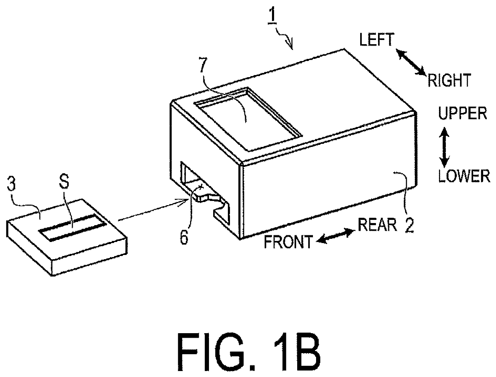

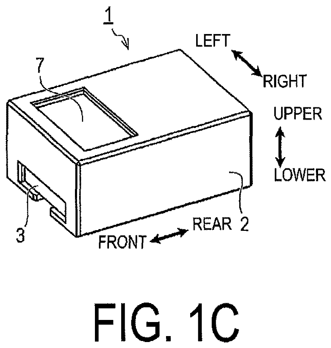

As illustrated in FIGS. 1A to 1C, a colorimetric device 1 includes a main body part 2 and a holder 3. The holder 3 is a member that holds a specimen S. A recessed portion 5 capable of accommodating the specimen S is formed on an upper surface of the holder 3. A shape of the specimen S is such that the specimen fits exactly in the recessed portion 5 of the holder 3. In other words, a shape of an outer surface of the specimen S and a shape of an inner surface of the recessed portion 5 are configured to match each other. Therefore, when the specimen S is held by the holder 3, a relative position between the specimen S and the holder 3 can be positioned at the same relative position simply by accommodating the specimen S in the recessed portion 5.

A slot 6 into which the holder 3 can be inserted is provided on a front surface of the main body part 2. The slot 6 is a hole portion or groove portion formed in the main body part 2. The slot 6 has a defined depth. A length of the holder 3 in the up-down direction and a length of the holder 3 in the left-right direction are set to be substantially equal to a length of the slot 6 in the up-down direction and a length of the slot 6 in the left-right direction.

When the holder 3 is inserted into the slot 6, the specimen S and the holder 3 are mounted on the main body part 2. When inserting the holder 3 into the slot 6, the relative position between the holder 3 and the specimen S and the main body part 2 can be positioned at the same relative position simply by pushing the holder 3 until the holder 3 abuts against an inner end of the slot 6. That is, the holder 3 is in a state of abutting against the inner end of the slot 6, in other words, in a state of being in contact with the inner end of the slot 6. In this state, the colorimetric device 1 performs measurement as described below.

A liquid crystal display 7 is provided on an upper surface of the main body part 2.

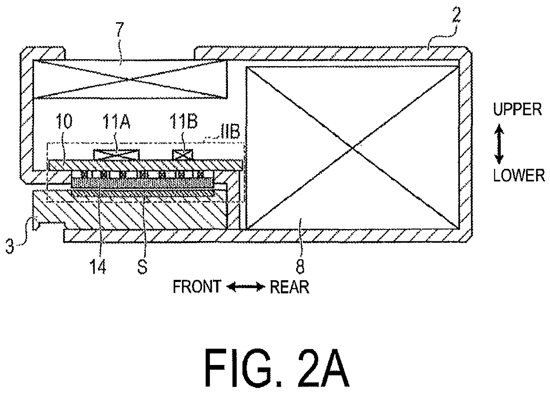

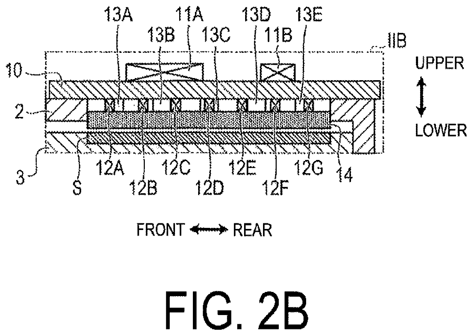

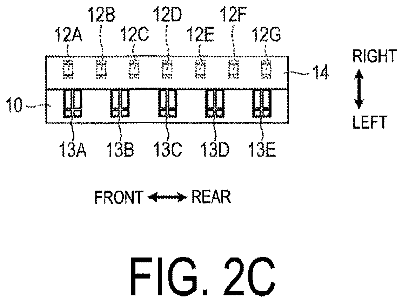

As illustrated in FIG. 2A, a battery 8 and a control board 10 are built in the main body part 2. As illustrated in FIGS. 2A and 2B, a control IC 11A, a power supply control IC 11B, and the like are mounted on an upper surface of the control board 10. As illustrated in FIGS. 2B and 2C, seven light-emitting elements 12A to 12G, five color sensors 13A to 13E, and the like are mounted on a lower surface of the control board 10. A light scattering plate 14 is disposed immediately below the light-emitting elements 12A to 12G. When the specimen S is held by the holder 3 and the holder 3 is inserted into the main body part 2, the specimen S held by the holder 3 is disposed at a position immediately below the color sensors 13A to 13E and the light scattering plate 14.

In the present embodiment, white LEDs are used as the light-emitting elements 12A to 12G. Each of the color sensors 13A to 13E is a light-receiving device (for example, an electronic circuit) that receives reflected light from a location to be measured and outputs a color of the location to be measured as an RGB value. In the present embodiment, the five color sensors 13A to 13E have functions of respectively facing five locations to be measured on a surface of the specimen S, receiving respective reflected lights from the five locations to be measured, and detecting respective colors of the five locations to be measured. The five color sensors 13A to 13E are arranged in a single row at 2 mm intervals.

The light scattering plate 14 has functions of scattering, within its interior, lights from the light-emitting elements 12A to 12G incident from an upper surface side and emitting the scattered lights from a lower surface side. When such a light scattering plate 14 is provided, seven point light sources configured by the seven light-emitting elements 12A to 12G can be converted into a surface light source configured by the light scattering plate 14. As a result, more uniform light with suppressed light source unevenness can be irradiated from the surface light source to the entire specimen S. The main body part 2 is configured to shield the specimen S from light coming from the outside of the colorimetric device 1 when the holder 3 and the specimen S are mounted on the main body part 2. Therefore, when measuring the color of the specimen S, only the light from the light scattering plate 14 is emitted to the specimen S.

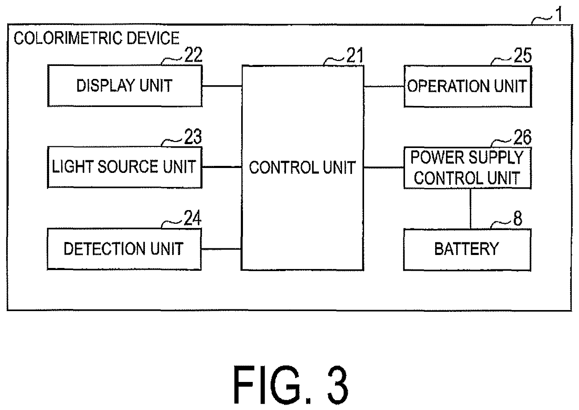

As illustrated in FIG. 3, the colorimetric device 1 includes a control unit 21, a display unit 22, a light source unit 23, a detection unit 24, an operation unit 25, and a power supply control unit 26. The control unit 21 is configured by the control IC 11A and the like described above. The display unit 22 is configured by the liquid crystal display 7 and the like described above. The light source unit 23 is configured by the light-emitting elements 12A to 12G, the light scattering plate 14, and the like described above. The detection unit 24 is configured by the color sensors 13A to 13E and the like described above. The operation unit 25 is configured by an input device (for example, an operation button, a touch panel, or the like) that can be operated by a user. The power supply control unit 26 is configured by the power supply control IC 11B and the like described above.

[Measurement Processing]

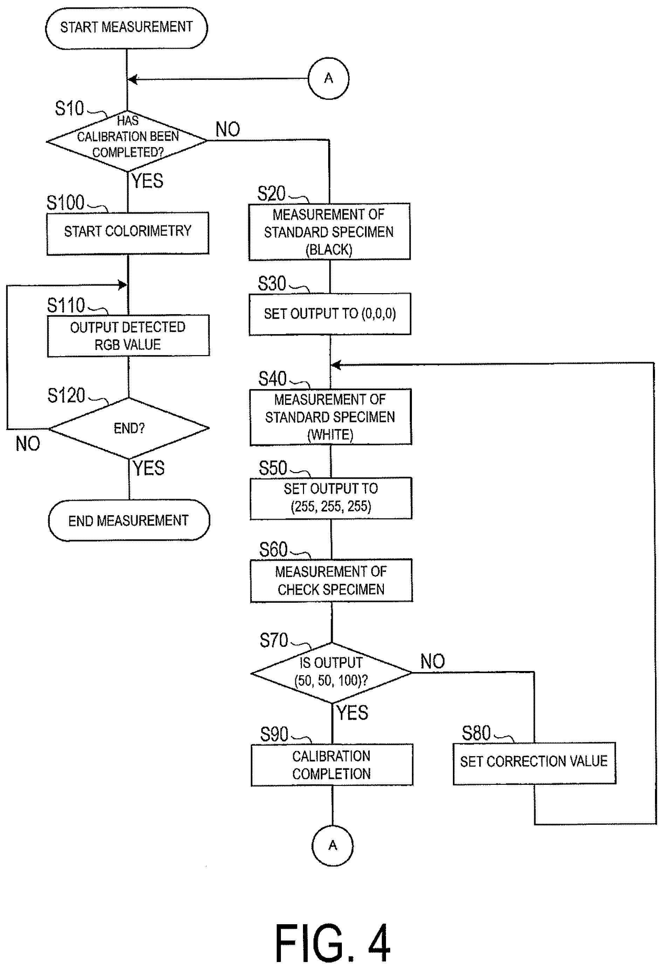

Next, measurement processing that is executed by the control unit 21 of the colorimetric device 1 when the colorimetric device 1 is used will be described with reference to FIG. 4. The measurement processing is processing that is executed when a power supply switch of the colorimetric device 1 is turned on.

When the measurement processing is started, the control unit 21 determines whether calibration has already been completed (S10). In S10, after the power supply switch is turned on, if S20 to S90 described below have been executed, it is determined that calibration has been completed, and if S20 to S90 have not been executed, it is determined that calibration has not been completed. In S10, when it is determined that calibration has not been completed (S10: NO), the control unit 21 executes measurement of a standard specimen (black) (S20).

The standard specimen (black) referred to here is a specimen whose output value (RGB value) in the colorimetric device 1 should be (0,0,0) when measured by the colorimetric device 1. The user sets the standard specimen (black) in the colorimetric device 1 and performs a colorimetric operation on the operation unit 25. Thereby, S20 is executed, and measurement of the standard specimen (black) is executed.

Subsequently, the control unit 21 sets an output value (RGB value) corresponding to the measurement result (R0, G0, B0) in S20 to (0,0,0) (S30). Even when the same standard specimen (black) is measured, the measurement result (R0, G0, B0) in S20 may vary to some extent due to external factors (for example, environmental temperature). However, it is guaranteed that the measurement result (R0, G0, B0) in S20 is the measurement result for the standard specimen (black).

Therefore, in S30, the measurement result (R0, G0, B0) in S20 is associated with the output value (0,0,0). When a similar measurement result (R0, G0, B0) is obtained in the subsequent processing, outputting the output value (0,0,0) makes it possible to output an output value from which the influence of the external factors has been excluded.

Subsequently, the control unit 21 executes measurement of a standard specimen (white) (S40). The standard specimen (white) referred to here is a specimen whose output value in the colorimetric device 1 should be (255, 255, 255) when measured by the colorimetric device 1. The user sets the standard specimen (white) in the colorimetric device 1 and performs a colorimetric operation on the operation unit 25. Thereby, S40 is executed, and measurement of the standard specimen (white) is executed.

Subsequently, the control unit 21 sets an output value corresponding to the measurement result (R255, G255, B255) in S40 to (255, 255, 255) (S50). Even when the same standard specimen (white) is measured, the measurement result (R255, G255, B255) in S40 may vary to some extent due to external factors (for example, environmental temperature). However, it is guaranteed that the measurement result (R255, G255, B255) in S40 is the measurement result for the standard specimen (white).

Therefore, in S50, the measurement result (R255, G255, B255) in S40 is associated with the output value (255, 255, 255). When a similar measurement result (R255, G255, B255) is obtained in the subsequent processing, outputting the output value (255, 255, 255) makes it possible to output an output value from which the influence of the external factors has been excluded.

In addition, when a measurement result (Rx, Gx, Bx) as an intermediate value is obtained, the measurement result (R0, G0, B0) and the measurement result (R255, G255, B255) are complemented for each of the R value, the G value, and the B value, and an output value (x, y, z) corresponding to a measurement result (Rx, Gy, Bz) can be obtained based on the complemented values. Note that the measurement result (Rx, Gx, Bx) as an intermediate value is a value between the measurement result (R0, G0, B0) corresponding to the output value (0,0,0) and the measurement result (R255, G255, B255) corresponding to the output value (255, 255, 255).

Subsequently, the control unit 21 executes measurement of a check specimen (S60). The check specimen referred to here is a specimen whose output value in the colorimetric device 1 should be a known RGB value when measured by the colorimetric device 1. In the present embodiment, a specimen whose output value in the colorimetric device 1 should be (50, 50, 100) is adopted as the check specimen. In other words, the check specimen is a specimen for which at least one of the R value, the G value, or the B value is set to an intermediate value between the value of the standard specimen (black) and the value of the standard specimen (white). The user sets the check specimen in the colorimetric device 1 and performs a colorimetric operation on the operation unit 25. Thereby, S60 is executed and measurement of the check specimen is executed.

Subsequently, the control unit 21 determines whether the output value is (50, 50, 100) (S70). If the output value is (50, 50, 100) (S70: YES), the calibration is completed (S90), and the processing returns to S10. On the other hand, if the output value is not (50, 50, 100) (S70: NO), a correction value is set (S80), and the processing returns to S40. Thus, the steps from S40 and subsequent steps are executed again.

When returning from S90 to S10, the control unit 21 determines that calibration has been completed in S10 (S10: YES) and starts colorimetry (S100). When the colorimetry started in S100 is completed, the control unit 21 outputs the detected RGB value (S110). In S110, the RGB value is displayed on the display unit 22. However, the method of outputting the RGB value is not limited to display output, and may be print output, file output, data transfer to a communication destination device, or the like.

Subsequently, the control unit 21 determines whether to end the processing (S120). In S120, if there is no output value that has not been output, it is determined that the processing is to be ended, and if there is an output value that has not been output, it is determined that the processing is not to be ended. If it is determined in S120 that the processing is not to be ended (S120: NO), the processing returns to S110, and the RGB value that has not been output is output (S110). On the other hand, when it is determined in S120 that the processing is to be ended (S120: YES), the measurement processing illustrated in FIG. 4 is ended.

[Measurement Example (Part 1)]

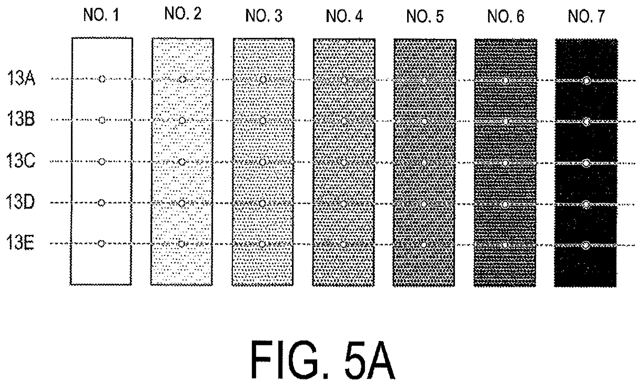

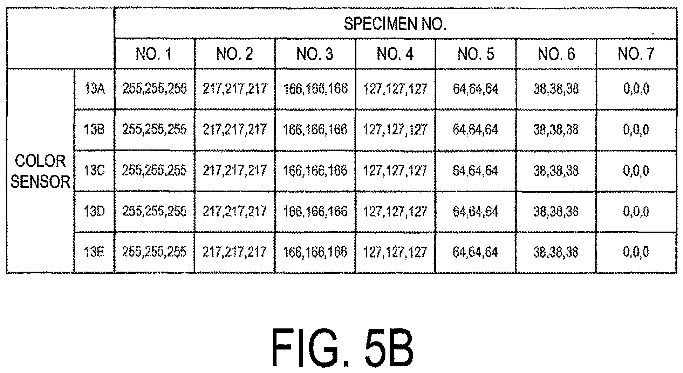

FIG. 5A is a diagram illustrating an example in which the entire specimen S undergoes discoloration over time. FIG. 5B shows output values obtained when colors of the specimen S illustrated in FIG. 5A are measured by the colorimetric device 1. Note that, for convenience of illustration, in FIG. 5A, FIG. 6A, and FIG. 7A, the change in color of the specimen S is expressed by changing the size of the halftone dots, but in the actual specimen S, the color of the specimen S changes, and the halftone dots do not exist on the actual specimen S.

In the example illustrated in FIG. 5A, the discoloration of the specimen S progresses in the order from No. 1 to No. 7 over time. The color sensors 13A to 13E measure colors of the specimen S at positions noted in FIG. 5A. In this example, the discoloration of the specimen S progresses uniformly as a whole. Therefore, the output values of the color sensors 13A to 13E for each of specimens No. 1 to No. 7 are the same output value.

[Measurement Example (Part 2)]

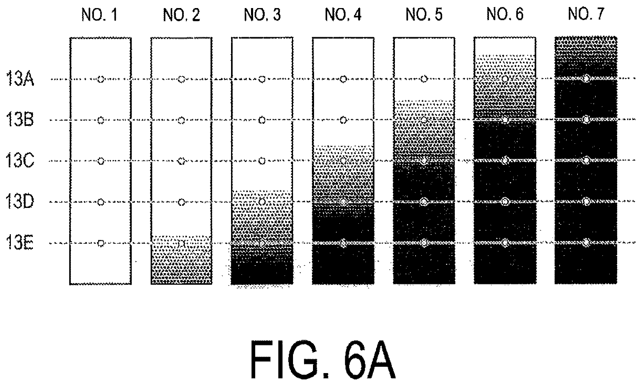

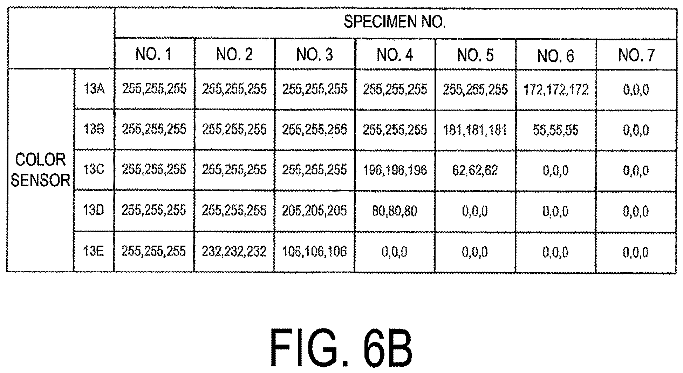

FIG. 6A is a diagram illustrating an example in which the specimen S undergoes discoloration from one end toward the other end over time. FIG. 6B shows output values obtained when colors of the specimen S illustrated in FIG. 6A are measured by the colorimetric device 1.

In this example, the discoloration of the specimen S progresses in the order from No. 1 to No. 7 over time. The color sensors 13A to 13E measure colors of the specimen S at positions noted in FIG. 6A. In this example, the discoloration of the specimen S progresses from one end toward the other end over time. Therefore, for each of specimens No. 1 to No. 7, the output values of the color sensors 13A to 13E show that the discoloration timing is delayed as the color sensor 13A side is approached, and the discoloration timing is advanced as the color sensor 13E side is approached.

[Measurement Example (Part 3)]

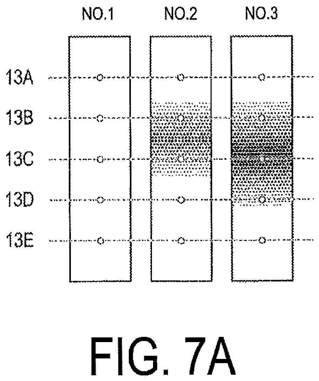

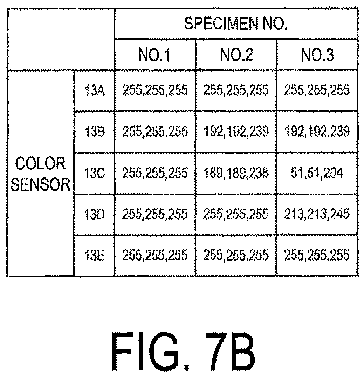

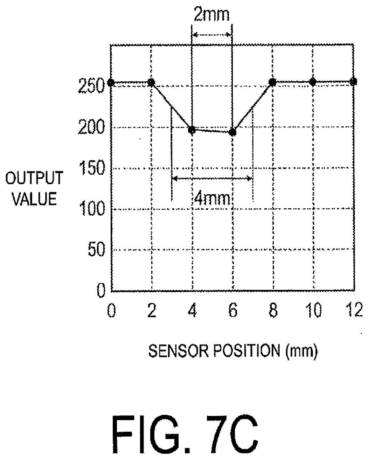

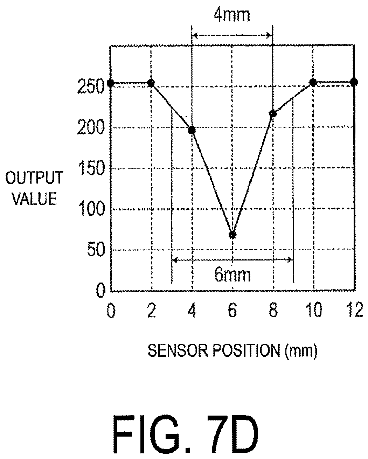

FIG. 7A is a diagram illustrating an example in which a part of the specimen S undergoes discoloration and a discoloration region expands over time. FIG. 7B shows output values obtained when colors of the specimen S illustrated in FIG. 7A are measured by the colorimetric device 1. FIG. 7C is a graph showing measurement results of specimen No. 2 illustrated in FIG. 7A. FIG. 7D is a graph showing measurement results of specimen No. 3 illustrated in FIG. 7A. Note that, for convenience of illustration, the color of the specimen S is represented by two values of black and white in FIG. 7A, but the actual specimen S has colors as indicated by RGB values in FIG. 7B.

In this example, the discoloration of the specimen S progresses in the order from No. 1 to No. 3 over time. The color sensors 13A to 13E measure colors of the specimen S at positions noted in FIG. 7A. In this example, the discoloration of the specimen S progresses from the vicinity of the center toward both ends over time. A length of a discoloration region of the specimen S can be calculated using the output values as shown in FIG. 7B. As a specific example, first, each RGB value is converted into a gray scale value using the RGB values shown in FIG. 7B. The conversion into the gray scale value may be performed using, for example, [Equation 1] below.

$$[\text{Equation 1}]$$
$$\text{Gray scale value} = \text{R value} \times 0.3 + \text{G value} \times 0.59 + \text{B value} \times 0.11$$

The graph shown in FIG. 7C is a graph obtained when the measurement result of specimen No. 2 is converted into gray scale values. The graph shown in FIG. 7D is a graph obtained when the measurement result of specimen No. 3 is converted into gray scale values.

In the case of the graph shown in FIG. 7C, discoloration is detected by the two color sensors 13B and 13C. In this case, for the color sensors 13B and 13C that detected the discoloration, the distance between sensors positioned farthest apart is 2 mm, and the minimum distance between sensors is 2 mm; therefore, the sum of these distances is 4 mm, which corresponds to the length of the discoloration region of the specimen S.

In the case of the graph shown in FIG. 7D, discoloration is detected by the three color sensors 13B, 13C, and 13D. In this case, for the color sensors 13B to 13D that detected the discoloration, the distance between sensors positioned farthest apart is 4 mm, and the minimum distance between sensors is 2 mm; therefore, the sum of these distances is 6 mm, which corresponds to the length of the discoloration region of the specimen S.

[Beneficial Effects]

According to the colorimetric device 1 described above, by mounting the specimen S on the main body part 2, the relative position of the specimen S with respect to the main body part 2, the light source unit 23, and the detection unit 24 can be positioned at the same relative position. Therefore, as illustrated in FIGS. 5A to 7A, when measuring a color of the specimen S a plurality of times, it is possible to perform positioning such that a measurement target location on the specimen S in each measurement is exactly the same. Therefore, for example, when measuring a color of the specimen S whose color changes over time a plurality of times, it is possible to detect a change in color at the same location.

In addition, the colorimetric device 1 includes the plurality of color sensors 13A to 13E disposed at 2 mm intervals. Therefore, for example, in a case where the discoloration region of the specimen S gradually changes as illustrated in FIGS. 6A to 7A, by measuring the color of the specimen S a plurality of times, it is possible to detect to what extent the discoloration region has progressed.

In addition, according to the colorimetric device 1, when the specimen S is mounted on the main body part 2, the main body part 2 shields the specimen S from light coming from the outside of the colorimetric device 1. Therefore, when measuring the color of the specimen S, it is possible to exclude the influence of light coming from the outside of the colorimetric device 1.

In addition, according to the colorimetric device 1, the lights emitted from the one or more light-emitting elements 12A to 12G are scattered by the light scattering plate 14 and then emitted to the specimen S. Therefore, light can be emitted more uniformly to the specimen S, as compared with a case where the light scattering plate 14 is not provided.

In addition, according to the colorimetric device 1, when the specimen S is held by the holder 3 and the holder 3 is inserted into the slot 6, the specimen S and the holder 3 are mounted on the main body part 2. Therefore, for example, in a case where the specimen S may remain held by the holder 3, the holder 3 may be mounted on and demounted from the main body part 2, thereby suppressing an excessive load from being applied to the specimen S, as compared with a case where the specimen S itself needs to be mounted and demounted.

Furthermore, according to the colorimetric device 1, it is possible to measure the color of the specimen S and to output the measurement result as the RGB value. In addition, a change in color at the same location on the surface of the specimen S can be acquired. Further, the range of the discoloration region can be detected, and the output value from which the length of the discoloration region can be estimated can be obtained. Therefore, it can be expected that such a colorimetric device 1 can be used in applications for detecting various phenomena accompanied by discoloration. As specific applications, for example, confirmation of color unevenness of a resin molded article, investigation of foreign matter of a heat conductive sheet, detection of abnormality of coating film thickness, discoloration analysis of a PH test paper, confirmation of color abnormality of metal plating, determination of presence or absence of surface treatment of metal, detection of discoloration due to metal corrosion, and the like are assumed.

[Other Embodiments]

While the colorimetric device 1 has been described above with reference to the exemplary embodiments, the embodiments described above are merely examples as an aspect of the present disclosure. That is, the present disclosure is not limited to the exemplary embodiments described above, and can be carried out in various forms without departing from the technical concept of the present disclosure.

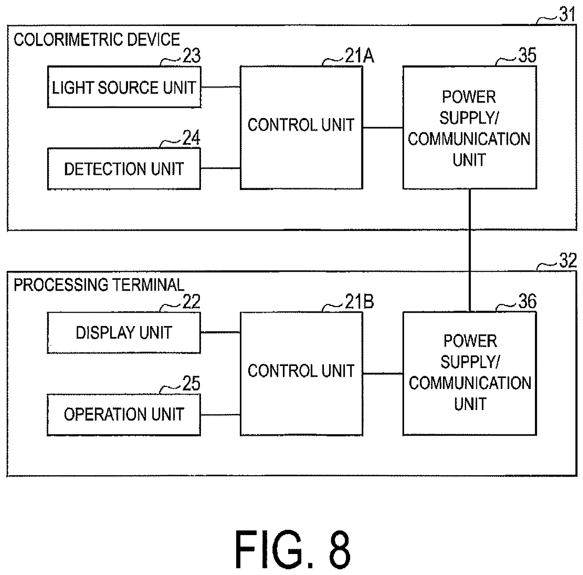

For example, in the above-described embodiment, the integrated colorimetric device 1 has been exemplified; however, a part of the configuration may be separated from the remaining configuration. Specifically, for example, as illustrated in FIG. 8, a colorimetric device 31 and a processing terminal 32 may be separated from each other. In the case of the example illustrated in FIG. 8, the colorimetric device 31 includes a control unit 21A, a light source unit 23, a detection unit 24, and a power supply/communication unit 35. The processing terminal 32 includes a control unit 21B, a display unit 22, an operation unit 25, and a power supply/communication unit 36.

The processing terminal 32 is, for example, a general-purpose device such as a personal computer or a smartphone. The light source unit 23, the detection unit 24, the display unit 22, and the operation unit 25 have the same configurations as those in the above-described example. The control units 21A and 21B have the same configuration as that of the above-described example in that the control units 21A and 21B control respective control targets. The power supply/communication units 35 and 36 may each be a device having both a power supplying function and a communication function, such as a USB interface device.

When the operation unit 25 is operated to operate the colorimetric device 31, a command corresponding to the operation is transmitted from the processing terminal 32 to the colorimetric device 31 via the power supply/communication units 35 and 36. The measurement result of the color measured by the detection unit 24 is transmitted from the colorimetric device 31 to the processing terminal 32 via the power supply/communication units 35 and 36.

In addition, in the above-described embodiment, the example in which the detection unit 24 includes the five color sensors 13A to 13E has been described. However, the number of the color sensors is not limited. Specifically, one or more color sensors may be provided. However, when it is desired to detect a change in length of the discoloration region, it is preferable to provide two or more color sensors, and when it is desired to increase the resolution of the detection range, it is preferable to increase the number of color sensors. For example, in the colorimetric device 1, the color sensors 13B and 13D may be omitted, and the three color sensors 13A, 13C, and 13E may be provided. Alternatively, in the colorimetric device 1, the color sensors 13A, 13B, 13D, and 13E may be omitted, and the one color sensor 13C may be provided.

In addition, in the above-described embodiment, the example in which the light source unit 23 includes the seven light-emitting elements 12A to 12G and the light scattering plate 14 has been described. However, the light scattering plate 14 may be optionally provided. In addition, it is also arbitrary whether to employ LEDs as the light-emitting elements 12A to 12G.

In addition, in the above-described embodiment, the main body part 2 is configured to shield the specimen S from external light. However, when the colorimetric device 1 is used in an environment in which the influence of external light is not excessive, it is also arbitrary whether the main body part 2 has the structure for shielding external light.

Note that a plurality of functions implemented by one component illustrated in the above embodiment may be implemented by a plurality of components. One function implemented by one component illustrated in the above embodiment may be implemented by a plurality of components. A plurality of functions implemented by a plurality of components illustrated in the above embodiment may be implemented by one component. One function implemented by a plurality of components illustrated in the above embodiment may be implemented by one component. Additionally, a portion of the configurations exemplified in the embodiments described above may be omitted. Among the above embodiments, at least part of the configuration exemplified in one embodiment may be added to or replace the configuration exemplified in another embodiment other than the one embodiment.

[Technical Concept Disclosed in Specification]

[Item 1]

A colorimetric device configured to measure a color of a specimen, the colorimetric device including:

a main body part configured for mounting of the specimen;
a light source unit configured to emit light to the specimen when the specimen is mounted on the main body part; and
a detection unit configured to become capable of receiving reflected light from the specimen and to detect a color of the specimen by receiving the reflected light, when the specimen is mounted on the main body part,
wherein when the specimen is mounted on the main body part, a relative position of the specimen with respect to the main body part, the light source unit, and the detection unit is configured to be positioned at the same relative position.

[Item 2]

The colorimetric device according to Item 1, wherein the detection unit includes a plurality of color sensors, and the plurality of color sensors are configured to receive respective reflected lights from a plurality of locations to be measured on a surface of the specimen and to detect respective colors of the plurality of locations to be measured.

[Item 3]

The colorimetric device according to Item 1 or 2, wherein the main body part is configured to shield the specimen from light coming from an outside of the colorimetric device when the specimen is mounted on the main body part.

[Item 4]

The colorimetric device according to any one of Items 1 to 3, wherein the light source unit includes one or more light-emitting elements and a light scattering plate configured to scatter light emitted by the one or more light-emitting elements, and is configured to irradiate the specimen with light scattered by the light scattering plate.

[Item 5]

The colorimetric device according to any one of Items 1 to 4, further comprising a holder configured to hold the specimen, wherein
the main body part has a slot into which the holder can be inserted, and is configured for mounting of the specimen and the holder onto the main body part when the holder holding the specimen is inserted into the slot.

**Claims**

1.  A colorimetric device configured to measure a color of a specimen, the colorimetric device comprising:

    a main body part configured for mounting of the specimen;
    a light source unit configured to emit light to the specimen when the specimen is mounted on the main body part; and
    a detection unit configured to become capable of receiving reflected light from the specimen and to detect a color of the specimen by receiving the reflected light, when the specimen is mounted on the main body part, wherein
    when the specimen is mounted on the main body part, a relative position of the specimen with respect to the main body part, the light source unit, and the detection unit is configured to be positioned at the same relative position.

2.  The colorimetric device according to claim 1, wherein

    the detection unit includes a plurality of color sensors, and
    the plurality of color sensors are configured to receive respective reflected lights from a plurality of locations to be measured on a surface of the specimen and to detect respective colors of the plurality of locations to be measured.

3.  The colorimetric device according to claim 1 or 2, wherein
    the main body part is configured to shield the specimen from light coming from an outside of the colorimetric device when the specimen is mounted on the main body part.

4.  The colorimetric device according to claim 1 or 2, wherein
    the light source unit includes one or more light-emitting elements and a light scattering plate configured to scatter light emitted by the one or more light-emitting elements, and is configured to irradiate the specimen with light scattered by the light scattering plate.

5.  The colorimetric device according to claim 1 or 2, further comprising:

    a holder configured to hold the specimen, wherein
    the main body part has a slot into which the holder can be inserted, and is configured for mounting of the specimen and the holder onto the main body part when the holder holding the specimen is inserted into the slot.

FIG. 1A

FIG. 1B

FIG. 1C

# FIG. 2A

FIG. 2B

## FIG. 2C

COLORIMETRIC DEVICE ~1

DISPLAY UNIT ~22

LIGHT SOURCE UNIT ~23

DETECTION UNIT ~24

CONTROL UNIT ~21

OPERATION UNIT ~25

POWER SUPPLY CONTROL UNIT ~26

BATTERY ~8

# FIG. 3

START MEASUREMENT

(A)

S10 — HAS CALIBRATION BEEN COMPLETED?

NO

YES

S100 — START COLORIMETRY

S20 — MEASUREMENT OF STANDARD SPECIMEN (BLACK)

S30 — SET OUTPUT TO (0,0,0)

S110 — OUTPUT DETECTED RGB VALUE

S40 — MEASUREMENT OF STANDARD SPECIMEN (WHITE)

S50 — SET OUTPUT TO (255, 255, 255)

S120 — END?

NO

YES

END MEASUREMENT

S60 — MEASUREMENT OF CHECK SPECIMEN

S70 — IS OUTPUT (50, 50, 100)?

NO

YES

S90 — CALIBRATION COMPLETION

S80 — SET CORRECTION VALUE

(A)

FIG. 4

FIG. 5A

|  |  | SPECIMEN NO. | | | | | | |
|---|---|---|---|---|---|---|---|---|
|  |  | NO. 1 | NO. 2 | NO. 3 | NO. 4 | NO. 5 | NO. 6 | NO. 7 |
| COLOR SENSOR | 13A | 255,255,255 | 217,217,217 | 166,166,166 | 127,127,127 | 64,64,64 | 38,38,38 | 0,0,0 |
|  | 13B | 255,255,255 | 217,217,217 | 166,166,166 | 127,127,127 | 64,64,64 | 38,38,38 | 0,0,0 |
|  | 13C | 255,255,255 | 217,217,217 | 166,166,166 | 127,127,127 | 64,64,64 | 38,38,38 | 0,0,0 |
|  | 13D | 255,255,255 | 217,217,217 | 166,166,166 | 127,127,127 | 64,64,64 | 38,38,38 | 0,0,0 |
|  | 13E | 255,255,255 | 217,217,217 | 166,166,166 | 127,127,127 | 64,64,64 | 38,38,38 | 0,0,0 |

# FIG. 5B

FIG. 6A

| | | SPECIMEN NO. | | | | | | |
|---|---|---|---|---|---|---|---|---|
| | | NO. 1 | NO. 2 | NO. 3 | NO. 4 | NO. 5 | NO. 6 | NO. 7 |
| COLOR SENSOR | 13A | 255,255,255 | 255,255,255 | 255,255,255 | 255,255,255 | 255,255,255 | 172,172,172 | 0,0,0 |
| | 13B | 255,255,255 | 255,255,255 | 255,255,255 | 255,255,255 | 181,181,181 | 55,55,55 | 0,0,0 |
| | 13C | 255,255,255 | 255,255,255 | 255,255,255 | 196,196,196 | 62,62,62 | 0,0,0 | 0,0,0 |
| | 13D | 255,255,255 | 255,255,255 | 205,205,205 | 80,80,80 | 0,0,0 | 0,0,0 | 0,0,0 |
| | 13E | 255,255,255 | 232,232,232 | 106,106,106 | 0,0,0 | 0,0,0 | 0,0,0 | 0,0,0 |

# FIG. 6B

FIG. 7A

| | | SPECIMEN NO. | | |
|---|---|---|---|---|
| | | NO.1 | NO.2 | NO.3 |
| COLOR SENSOR | 13A | 255,255,255 | 255,255,255 | 255,255,255 |
| | 13B | 255,255,255 | 192,192,239 | 192,192,239 |
| | 13C | 255,255,255 | 189,189,238 | 51,51,204 |
| | 13D | 255,255,255 | 255,255,255 | 213,213,245 |
| | 13E | 255,255,255 | 255,255,255 | 255,255,255 |

# FIG. 7B

FIG. 7C

FIG. 7D

COLORIMETRIC DEVICE — 31

LIGHT SOURCE UNIT — 23

DETECTION UNIT — 24

CONTROL UNIT — 21A

POWER SUPPLY/ COMMUNICATION UNIT — 35

PROCESSING TERMINAL — 32

DISPLAY UNIT — 22

OPERATION UNIT — 25

CONTROL UNIT — 21B

POWER SUPPLY/ COMMUNICATION UNIT — 36

# FIG. 8

## INTERNATIONAL SEARCH REPORT

| International application No. |
|---|
| **PCT/JP2023/041792** |

**A. CLASSIFICATION OF SUBJECT MATTER**

***G01J 3/50***(2006.01)i

FI: G01J3/50

According to International Patent Classification (IPC) or to both national classification and IPC

**B. FIELDS SEARCHED**

Minimum documentation searched (classification system followed by classification symbols)

G01J 3/00-3/52; G01J 1/02-1/06; G01N 21/00-21/01; G01N 21/17-21/83; G01N 33/48-33/98; G12B 5/00; H04N 1/024-1/207

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-288581 A (NISSHO CORP) 27 October 1998 (1998-10-27)<br>    paragraphs [0005], [0008]-[0022], fig. 1-9 | 1, 5 |
| Y | | 2-4 |
| Y | JP 2003-287501 A (FUJI PHOTO FILM CO., LTD.) 10 October 2003 (2003-10-10)<br>    paragraphs [0114]-[0118], fig. 22 | 2-4 |
| Y | JP 2021-113744 A (CONCEPT ART TECHNOLOGIES CO., LTD.) 05 August 2021<br>(2021-08-05)<br>    paragraphs [0015]-[0016], [0050], [0055], fig. 1-2 | 3-4 |
| Y | JP 53-046074 A (DAINICHISEIKA COLOR & CHEMICALS MFG. CO., LTD.) 25 April<br>1978 (1978-04-25)<br>    p. 2, lower left column, line 6 to lower right column, line 3, fig. 4A-4B | 4 |
| A | JP 2019-100863 A (KONICA MINOLTA, INC.) 24 June 2019 (2019-06-24)<br>    entire text, fig. 1-15 | 1-5 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/041792**

### C. DOCUMENTS CONSIDERED TO BE RELEVANT

| Category* | Citation of document, with indication, where appropriate, of the relevant passages | Relevant to claim No. |
|---|---|---|
| A | JP 2019-020311 A (PAPALAB COMPANY, LIMITED) 07 February 2019 (2019-02-07) paragraphs [0105]-[0108], fig. 2 | 1-5 |
| A | JP 2014-224733 A (KONICA MINOLTA, INC.) 04 December 2014 (2014-12-04) paragraphs [0028]-[0054], fig. 1-7 | 1-5 |
| A | WO 2012/169592 A1 (PROSPER CREATIVE COMPANY, LIMITED) 13 December 2012 (2012-12-13) entire text, fig. 1-31 | 1-5 |
| A | JP 2010-122098 A (OLYMPUS CORPORATION) 03 June 2010 (2010-06-03) entire text, fig. 1-7 | 1-5 |

Form PCT/ISA/210 (second sheet) (July 2022)

**INTERNATIONAL SEARCH REPORT**
Information on patent family members

International application No.

**PCT/JP2023/041792**

| Patent document cited in search report | | | Publication date (day/month/year) | Patent family member(s) | | | Publication date (day/month/year) |
|---|---|---|---|---|---|---|---|
| JP | 10-288581 | A | 27 October 1998 | (Family: none) | | | |
| JP | 2003-287501 | A | 10 October 2003 | US paragraphs [0141]-[0145], fig. 22 | 2003/0185712 | A1 | |
| JP | 2021-113744 | A | 05 August 2021 | (Family: none) | | | |
| JP | 53-046074 | A | 25 April 1978 | (Family: none) | | | |
| JP | 2019-100863 | A | 24 June 2019 | US CN | 2019/0170582 109870236 | A1 A | |
| JP | 2019-020311 | A | 07 February 2019 | (Family: none) | | | |
| JP | 2014-224733 | A | 04 December 2014 | (Family: none) | | | |
| WO | 2012/169592 | A1 | 13 December 2012 | US EP CN | 2014/0185927 2720015 103718007 | A1 A1 A | |
| JP | 2010-122098 | A | 03 June 2010 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2022127869 A